(19) Europäisches Patentamt
European Patent Office
Office européen des brevets

(11) **EP 2 512 805 B1**

(12) **EUROPEAN PATENT SPECIFICATION**

(45) Date of publication and mention
of the grant of the patent:
**21.02.2018 Bulletin 2018/08**

(21) Application number: **10796550.1**

(22) Date of filing: **15.12.2010**

(51) Int Cl.:
*B32B 27/32* (2006.01)          *B32B 7/02* (2006.01)
*C08L 23/08* (2006.01)

(86) International application number:
**PCT/US2010/060369**

(87) International publication number:
**WO 2011/075492 (23.06.2011 Gazette 2011/25)**

(54) **FILMS AND ARTICLES PREPARED FROM THE SAME**

FILME UND DARAUS HERGESTELLTE ARTIKEL

FILMS ET PRODUITS PRÉPARÉS À PARTIR DUDIT FILM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2009 US 287859 P**

(43) Date of publication of application:
**24.10.2012 Bulletin 2012/43**

(73) Proprietor: **Dow Global Technologies LLC
Midland, MI 48674 (US)**

(72) Inventor: **HERNANDEZ, Claudia
Lake Jackson
TX 77566 (US)**

(74) Representative: **Boult Wade Tennant
Verulam Gardens
70 Gray's Inn Road
London WC1X 8BT (GB)**

(56) References cited:
**EP-A2- 0 095 299      WO-A1-2005/103123
US-A- 4 389 450      US-A- 4 643 928**

**Description**

BACKGROUND OF INVENTION

The invention relates to films that have a different coefficient of friction (COF) on each face of the film.

Films used in automatic packaging require a relatively low COF for good machinability during packaging. If package will be stacked, the film also needs to have high COF for product stack stability. For example, films used to wrap personal care items typically need to have "low COF inside face" for machinability. Typically, about 20 wraps are stacked by the machine and placed in a bag. The external COF of the wrap needs to be high to avoid the slipping of the wraps and disruption of the packaging. For Heavy Duty Shipping Sacks (HDSS) the bags are stacked, and each bag needs to have high COF on its external face, for pallet stability. A common industry practice to reduce COF is to add a slip agent to the film formulation; however, conventional slip agents typically migrate to both faces of the film, and thus reduce any COF differential between the two surfaces of the film. Non-migratory slip agents have also been developed, but typically high levels of these agents are needed for optimum performance, and the high costs of these agents make their use too costly for most packaging applications. Thus, there is a need for films that display both a high COF in one film face and a low COF in the other film, and which can be formed without any costly slip agents and without costly mechanical means, such as embossing, or application of an adhesive. Such films should perform well in primary packaging processes, and subsequent secondary packaging and storage processes.

International Publication No. WO 2005/103123 discloses a composition suitable for use in a single-sided, stretch cling film, the composition having from 0.1 to 20 percent, by weight, of a propylene-based copolymer having substantially isotactic propylene sequences, and having from 80 to 99 percent, by weight, of an ethylene-based copolymer having a density of at least 0.905 g/cc. The film made from the composition exhibits the following properties: "cling layer to release layer" cling of at least 27 Newtons per meter (70 grams force per inch), as measured by ASTM D-5458-95; noise levels of less than 87 dB during unwinding operations; and a modulus of at least 3 MPA, as determined by ASTM D-882.

International Publication No. WO 2008/082975 discloses a composition comprising a propylene-based interpolymer and a saturated compound selected from the group consisting of aliphatic amides, hydrocarbon waxes, hydrocarbon oils, fluorinated hydrocarbons, and siloxanes. The propylene-based interpolymer comprises (a) greater than 50 mole percent propylene, based on the total moles of polymerizable monomers, and (b) ethylene, or ethylene and more unsaturated comonomers, or one or more unsaturated comonomers. The propylene-based interpolymer has at least one of the following properties: (i) 13C NMR peaks corresponding to a regio-error at about 14.6 and about 15.7 ppm, and (ii) a DSC curve with a $T_{me}$ that remains essentially the same, and a $T_{Max}$ that decreases as the amount of comonomer in the interpolymer is increased. The invention also provides for articles, such as films, comprising at least one component formed from an inventive composition.

International Publication No. WO 2002/44252 discloses the use of a polymer composition, for films, and which comprises a propylene terpolymer and a slip agent. The propylene terpolymer is comprised of 0.3-0.8 weight percent of ethylene, 2.0-15.0 weight percent of at least one C4-C8 a-olefin, and 84.2-97.7 weight percent of propylene. These films are disclosed as exhibiting the following properties: a) a dynamic Coefficient of Friction (COF), after storage for three days at 23°C, of less than 0.30 (measured according to DIN 53 375), and b) a blooming behavior, measured in terms of haze according to ASTM D 1003-92, after storage for 14 days at 40°C, which shows a deterioration of no more than 100 percent of the original value, which is measured after storage for four days at 23°C. See also International Publication No. WO 2002/44251.

International Publication No. WO 1998/37143 discloses a film comprising a "Surface Friction Modifying Additive," and at least one surface layer comprising a mPE. The mPE is a homopolymer of ethylene, or a copolymer of ethylene and a C3 to C20 olefin (preferably octene or hexene), and has an Mw/Mn of four or less, and a CDBI of 50 percent or more. At least one surface layer of mPE is treated by corona discharge, and thereafter, and it is disclosed that there is at least a 20-60 percent increase in the coefficient of friction of the treated mPE surface layer, as compared to the COF prior to the corona discharge treatment (tested according to ASTMD-1894, after seven days of storage at 23°C and 50% relative humidity). The COF of the corona treated mPE surface is higher than the other surface layer.

Additional films and other structures are described in U.S. Patent 4389450, U.S. Patent 4560598, International Publication Nos. WO 2009/091952, WO 2008/017244, WO 2008/079755, WO 2010/003047, WO 2010/002837, WO 2010/039687, PCT Application No. PCT/US10/042319, and EP Application Nos. EP09382115.5 and EP2233520A1.

There remains a need for films that display a both high COF in one film face and a low COF in the other film face. There is a further need that such films perform well in packaging processes, without any costly chemical additives or costly mechanical means to alter the COF at a film face. There is a further need for such films which can be formed from current, commercially available resins and additives. These needs have been met by the following invention.

## SUMMARY OF THE INVENTION

The invention provides a film comprising at least two layers, a first layer and a second layer, wherein the first layer is formed from a first composition comprising

A) a propylene-based polymer present in an amount of from greater than, or equal to, 1 weight percent to an amount of from less than, or equal to 20 weight percent, based on the weight of the composition,

B) a first ethylene/a-olefin interpolymer present in an amount of from less than, or equal to, 99 weight percent to an amount of greater than, or equal to 50 weight percent, based on the weight of the composition, and

C) optionally a LDPE homopolymer with a density from 0.91 to 0.93 g/cc, as measured in accordance with ASTM D-792-08, and a melt index (12) from 0.2 to 6 g/10 min, as measured in accordance with ASTM D-1238-04, condition 190°C/2.16 kg; and

wherein the second layer is formed from a second composition comprising:

D) a second ethylene/a-olefin interpolymer,

E) optionally a LDPE homopolymer with a density from 0.91 to 0.93 g/cc, as measured in accordance with ASTM D-792-08, and a melt index (12) from 0.2 to 6 g/10 min, =as measured in accordance with ASTM D-1238-04, condition 190°C/2.16 kg,

F) optionally a first polymer mixture comprising a homogeneously branched ethylene/a-olefin interpolymer, and a heterogeneously branched ethylene/a-olefin interpolymer, and wherein the first polymer mixture has a density from 0.90 to 0.93 g/cc, as measured in accordance with ASTM D-792-08, and a melt index (12) from 0.5 to 5 g/10 min, as measured in accordance with ASTM D-1238-04, condition 190°C/2.16 kg, and

G) at least one amide compound wherein the amide compound contains at least 12 carbon atoms and wherein the difference in static COF between first layer and second layer is at least 0.3, as determined by ASTM D1894, measured film to film, at 20 days of aging at 23°C and 50% relative humidity.

## BRIEF DESCRIPTION OF THE DRAWINGS

Figure 1 depicts the static COF of inventive and comparative films after the specified aging periods (layer A - layer A).
Figure 2 depicts the dynamic COF of inventive and comparative films after the specified aging periods (layer A - layer A).
Figure 3 depicts the static COF of inventive and comparative films after the specified aging periods (layer B - layer B).
Figure 4 depicts the dynamic COF of inventive and comparative films after the specified aging periods (layer B - layer B).
Figure 5 depicts the differential static COF (layer B - layer A) for a control sample 59 and an inventive sample 63.

## DETAILED DESCRIPTION OF THE INVENTION

As discussed above, the invention provides a film comprising at least two layers, a first layer and a second layer, wherein the first layer is formed from a first composition comprising

A) a propylene-based polymer, and preferably a propylene/ethylene interpolymer,

B) a first ethylene/a-olefin interpolymer, and preferably an ethylene/a-olefin copolymer, and

C) optionally a LDPE homopolymer with a density from 0.91 to 0.93 g/cc, and a melt index (12) from 0.2 to 6 g/10 min, preferably from 0.3 to 3 g/10 min; and

wherein the second layer is formed from a second composition comprising:

D) a second ethylene/a-olefin interpolymer, preferably an ethylene/a-olefin copolymer,

E) optionally a LDPE homopolymer with a density from 0.91 to 0.93 g/cc, and a melt index (12) from 0.2 to 6 g/10 min, preferably from 0.3 to 3 g/10 min,

F) optionally a first polymer mixture comprising a homogeneously branched ethylene/a-olefin interpolymer, and preferably a homogeneously branched ethylene/a-olefin copolymer (and more preferably a homogeneously branched substantially linear ethylene/a-olefin copolymer); and a heterogeneously branched ethylene/a-olefin interpolymer, and preferably a heterogeneously branched ethylene/a-olefin copolymer, and wherein the first polymer mixture has a density from 0.90 to 0.93 g/cc and a melt index (12) from 0.5 to 5 g/10 min, and

G) at least one amide compound, and preferably at least one amide compound containing at least 12, preferably at least 15, and more preferably at least 18 carbon atoms.

In one embodiment, the first composition comprises Component C.

In one embodiment, the second composition comprises Components E and F. In a further embodiment, the first composition comprises Component C.

In one embodiment, the second composition comprises Component E. In a further embodiment, the first composition comprises Component C.

In one embodiment, the second composition comprises Component F. In a further embodiment, the first composition comprises Component C.

In one embodiment, the propylene-based polymer of Component A has a density from 0.84 to 0.92 g/cc, preferably from 0.85 to 0.91 g/cc, more preferably from 0.86 to 0.90 g/cc, even more from 0.86 to 0.89 g/cc (1 cm$^3$ = 1 cc).

In one embodiment, the propylene-based polymer of Component A has a melt flow rate (MFR) from 0.5 to 12 g/10 min, preferably from 0.8 to 10 g/10 min, and more preferably from 1 to 5 g/10 min.

In one embodiment, the propylene-based polymer of Component A has a melt flow rate (MFR) from 1 to 5 g/10 min, or from 1 to 3 g/10 min.

The propylene-based polymer of Component A is present in an amount less than, or equal to, 20 weight percent, preferably less than, or equal to, 15 weight percent, and more preferably less than, or equal to, 10 weight percent, based on the weight of the first composition.

The propylene-based polymer of Component A is present in an amount greater than, or equal to, 1 weight percent, preferably greater than, or equal to, 2 weight percent, based on the weight of the first composition.

In a preferred embodiment, Component A is present in a lesser amount than Component B. If component A is the major component, too much blocking may occur. If Component B is omitted from the first composition, the heat sealability of the film would be impaired (reduced).

In one embodiment, the propylene-based polymer of Component A is a propylene/ethylene copolymer.

The first ethylene/a-olefin interpolymer of Component B is present in an amount less than, or equal to, 99 weight percent, preferably less than, or equal to, 90 weight percent, more preferably less than, or equal to, 80 weight percent based on the weight of the first composition.

The first ethylene/a-olefin interpolymer of Component B is present in an amount greater than, or equal to, 50 weight percent, preferably greater than, or equal to, 60 weight percent, more preferably greater than, or equal to, 70 weight percent, based on the weight of the first composition.

In one embodiment, the first ethylene/a-olefin interpolymer of Component B has a density from 0.90 to 0.94 g/cc, and preferably from 0.91 to 0.93 g/cc.

In one embodiment, the first ethylene/ $\alpha$-olefin interpolymer of Component B has a melt index (12) from 0.5 to 5 g/10 min, preferably from 0.5 to 3 g/10 min, and more preferably from 0.5 to 2 g/10 min.

In one embodiment, the first ethylene/a-olefin interpolymer of Component B is a heterogeneously branched interpolymer, and preferably a heterogeneously branched copolymer.

In one embodiment, the second ethylene/a-olefin interpolymer of Component D has a density from 0.90 to 0.94 g/cc, and preferably from 0.91 to 0.93 g/cc.

In one embodiment, the second ethylene/a-olefin interpolymer of Component D has a melt index (12) from 0.5 to 5 g/10 min, preferably from 0.5 to 3 g/10 min, and more preferably from 0.5 to 2 g/10 min.

In one embodiment, the second ethylene/a-olefin interpolymer of Component D is a heterogeneously branched interpolymer, and preferably a heterogeneously branched copolymer.

In one embodiment, the inventive film further comprises a third layer formed from a third composition comprising one of the following: a) an ethylene-based polymer with a density from 0.94 to 0.96, and a melt index (12) from 0.05 to 1 g/10 min, preferably from 0.1 to 1 g/10 min, and more preferably from 0.2 to 1 g/10 min; or b) a second polymer mixture comprising a homogeneously branched ethylene/a-olefin interpolymer, and preferably a homogeneously branched ethylene/a-olefin copolymer (and more preferably a homogeneously branched substantially linear ethylene/a-olefin copolymer); and a heterogeneously branched ethylene/a-olefin interpolymer, and preferably a heterogeneously branched ethylene/a-olefin copolymer; and wherein the second polymer mixture has a density from 0.90 to 0.95 g/cc, preferably from 0.92 to 0.95, and a melt index (12) from 0.1 to 5 g/10 min, preferably from 0.5 to 5 g/10 min. In a further embodiment, the ethylene-based polymer has an 121/12 ratio from 80 to 120, preferably from 85 to 115, and more preferably from 90 to 110. In a further embodiment, the ethylene-based polymer is a polyethylene homopolymer. In a further embodiment, component a) or component b) is present in an amount less than, or equal to, 30 weight percent, preferably less than, or equal to, 20 weight percent, and more preferably less than, or equal to, 15 weight percent, based on the weight of the third composition. In a further embodiment, the third composition further comprises an ethylene/a-olefin copolymer, and preferably this copolymer has a density from 0.90 to 0.93 g/cc, preferably from 0.91 to 0.93 g/cc and a melt index (12) from 0.2 to 5 g/10 min, preferably from 0.5 to 2 g/10 min.

In one embodiment, the inventive film further comprises a third layer formed from a third composition comprising an ethylene-based polymer with a density from 0.94 to 0.96, and a melt index (12) from 0.05 to 1 g/10 min, preferably from 0.1 to 1 g/10 min, and more preferably from 0.2 to 1 g/10 min. In a further embodiment, the ethylene-based polymer

has an I21/I2 ratio from 80 to 120, preferably from 85 to 115, and more preferably from 90 to 110. In a further embodiment, the ethylene-based polymer is a polyethylene homopolymer. In a further embodiment the ethylene-based polymer is present in an amount less than, or equal to, 30 weight percent, preferably less than, or equal to, 20 weight percent, and more preferably less than, or equal to, 15 weight percent, based on the weight of the third composition. In a further embodiment, the third composition further comprises an ethylene/a-olefin copolymer, and preferably this copolymer has a density from 0.90 to 0.93 g/cc, preferably from 0.91 to 0.93 g/cc and a melt index (I2) from 0.2 to 5 g/10 min, preferably from 0.5 to 2 g/10 min.

In one embodiment, the inventive film further comprises a third layer formed from a third composition comprising a second polymer mixture comprising a homogeneously branched ethylene/a-olefin interpolymer, and preferably a homogeneously branched ethylene/a-olefin copolymer (and more preferably a homogeneously branched substantially linear ethylene/a-olefin copolymer); and a heterogeneously branched ethylene/a-olefin interpolymer, and preferably a heterogeneously branched ethylene/a-olefin copolymer; and wherein the second polymer mixture has a density from 0.90 to 0.95 g/cc, preferably from 0.92 to 0.95 g/cc, and a melt index (I2) from 0.1 to 5 g/10 min, preferably from 0.5 to 5 g/10 min. In a further embodiment the second polymer mixture is present in an amount less than, or equal to, 30 weight percent, preferably less than, or equal to, 20 weight percent, and more preferably less than, or equal to, 15 weight percent, based on the weight of the third composition. In a further embodiment, the third composition further comprises an ethylene/ α-olefin copolymer, and preferably this copolymer has a density from 0.90 to 0.93 g/cc, preferably from 0.91 to 0.93 g/cc and a melt index (I2) from 0.2 to 5 g/10 min, preferably from 0.5 to 2 g/10 min.

In one embodiment, the third layer is located between the first layer and second layer. In a further embodiment, the thickness of the third layer is greater than the thickness of each of the first and second layers. In a further embodiment, the third layer comprises greater than 50 percent, or greater than, or equal to, 55 percent, or greater than, or equal to, 60 percent, of the total film thickness.

In one embodiment, the thickness of the third layer is from 40 percent to 70 percent of total film thickness.

In one embodiment, the thickness of the first layer is from 10 percent to 30 percent, based on the total thickness of the film.

In one embodiment, the density of the second composition is from 0.92 to 0.95 g/cc.

In one embodiment, the second composition further comprises silica, talc, or a combination thereof.

In one embodiment, the second composition does not comprise a propylene-based polymer.

In one embodiment, the thickness of second layer is greater than 70 percent of the total thickness of film. In a further embodiment, the thickness of the second layer is less than 90 percent of the total thickness of the film.

Layer percentages can be determined by mass ratios of the compositions at the extruders used to form the multilayered film. Films may also be examined by optical microscopy to confirm percentages. Each layer percentage is based on total film thickness.

In one embodiment, the first layer is a skin layer.

In one embodiment, the second layer is a skin layer.

In one embodiment, the first layer is a skin layer, and the second layer is a skin layer.

In one embodiment, the thickness of the first layer equals the thickness of the second layer.

The difference in static COF between first layer and second layer is at least 0.3, preferably at least 0.4, more preferably at least 0.5, even more preferably at least 0.6, as determined by ASTM D1894, measured film to film, at 20 days of aging at 23°C and 50% relative humidity. See the test method section and experimental section below.

In one embodiment, the difference in the static COF between the first layer and the second layer is from 0.3 to 0.9, preferably from 0.4 to 0.9, and more preferably from 0.5 to 0.9, as determined by ASTM D1894, measured film to film, at 20 days of aging at 23 °C and 50% relative humidity. See the test method section and experimental section below.

In one embodiment, the difference in static COF between first layer and second layer is at least 0.3, preferably at least 0.4, more preferably at least 0.5, even more preferably at least 0.6, as determined by ASTM D1894, measured film to film, at 40 days of aging at 23°C and 50% relative humidity. See the test method section and experimental section below.

In one embodiment, the difference in the static COF between the first layer and the second layer is from 0.3 to 0.9, preferably from 0.4 to 0.9, and more preferably from 0.5 to 0.9, as determined by ASTM D1894, measured film to film, at 40 days of aging at 23°C and 50% relative humidity. See the test method section and experimental section below.

In one embodiment, the difference in static COF between first layer and second layer is at least 0.3, preferably at least 0.4, more preferably at least 0.5, even more preferably at least 0.6, as determined by ASTM D1894, measured film to film, from 20 to 40 days of aging at 23°C and 50% relative humidity. See the test method section and experimental section below.

In one embodiment, the difference in the static COF between the first layer and the second layer is from 0.3 to 0.9, preferably from 0.4 to 0.9, and more preferably from 0.5 to 0.9, as determined by ASTM D1894, measured film to film, from 20 to 40 days of aging at 23°C and 50% relative humidity. See the test method section and experimental section below.

In one embodiment, the total film thickness is greater than, or equal to, 50 μm (microns).

In one embodiment, the film comprises at least three layers. In a further embodiment, the thickness of at least one core layer is greater than the thickness of each skin layer. In a further embodiment, at least one core layer comprises greater than 50 percent, or greater than, or equal to, 55 percent, or greater than, or equal to, 60 percent, of the total film thickness.

In one embodiment, the film comprises no more than three layers. In a further embodiment, the core layer is greater than the thickness of each skin layer. In a further embodiment, the core layer comprises greater than 50 percent, or greater than, or equal to, 55 percent, or greater than, or equal to, 60 percent, of the total film thickness.

In one embodiment, the film consists of three layers. In a further embodiment, the core layer is greater than the thickness of each skin layer. In a further embodiment, the core layer comprises greater than 50 percent, or greater than, or equal to, 55 percent, or greater than, or equal to, 60 percent, of the total film thickness.

In one embodiment, the film consists of two layers. In a further embodiment, the two layers have the same thickness.

In one embodiment, the film does not comprise a woven and/or nonwoven web.

In one embodiment, the film comprises a first layer formed from a first composition comprising a propylene/ethylene copolymer having a density from 0.86 g/cc to 0.90 g/cc, a MFR from 1 g/10min to 12 g/10min, and an heterogeneously branched ethylene/a-olefin copolymer having a density from 0.91 g/cc to 0.945 g/cc, and a melt index (12) from 0.5 g/10 min to 3.5 g/10 min. In a further embodiment, this first composition does not comprise an amide compound. In a further embodiment, the film comprises a layer formed from a second composition comprising an ethylene/a-olefin copolymer with a density from 0.91 to 0.93 g/cc, and a melt index (12) from 0.5 to 2 g/10 min.

In one embodiment, the amount of the propylene-based polymer, in the first composition, is less than the amount of the first ethylene/a-olefin interpolymer.

In one embodiment, the first composition comprises less than, or equal to, 20 weight percent, or less than, or equal to, 15 weight percent, or less than, or equal to, 10 weight percent, of the propylene-based polymer, based on the sum weight of the propylene-based polymer and the first ethylene/a-olefin interpolymer.

In one embodiment, the first composition comprises from 1 to 20 weight percent, or from 2 to 15 weight percent, or from 5 to 10 weight percent, of the propylene-based polymer, based on the sum weight of the propylene-based polymer and the first ethylene/a-olefin interpolymer.

In one embodiment, neither the first composition nor the second composition comprises a polar additive of the following formula: $R_1(OCH_2CH_2)_xOH$, where $R_1$ is a straight or branched chain alkyl of 20 to 100 carbon atoms, and x is from 2 to 100.

The invention also provides an article comprising at least one component formed from an inventive film.

An inventive film may comprise a combination of two or more embodiments as described herein.

An inventive article may comprise a combination of two or more embodiments as described herein.

A composition used to form a film layer may comprise a combination of two or more embodiments as described herein.

Each component, A, B, C, D, E, F and G, may comprise a combination of two or more embodiments as described herein.

It has been discovered that a blend of a propylene-based polymer (for example, a 1-20 wt%, preferably 2-10 wt%, of a propylene-ethylene copolymer) with an ethylene/a-olefin interpolymer (for example, a 80-99 wt%, preferably 90-98 wt%, ethylene/octene copolymer) can be used to form a first film layer, in which a slip agent (contained in another film layer) does not migrate at same rate to this first film layer, and the COF of this first film layer remains high for a long period of time (for example, at least 1650 hours). It has also been discovered that the addition of such a propylene-based polymer to a composition, used to form one exterior layer of the film, achieves the industrially required properties of having high COF on this layer, In addition, as discussed above, a low COF can be maintained in the other exterior layer by using commercially available olefin-based polymers and slip agents. The differential in the COF of both film layers (or faces) is obtained with the proper formulation of the polymer components, without the need for any additional mechanical processes, such as embossing, or post-extrusion addition of an adhesive, and without the need of costly slip agents.

The inventive films allow for faster packaging processes at lower costs, and these films perform satisfactorily in primary packaging and subsequent secondary packaging and storage processes. In addition, the inventive films do not deteriorate the appearance of the package, which occurs when the film is embossed, or when an adhesive is applied to the film. Also, the printing quality of the film remains good through the end of the market chain.

Moreover, the differential COF (high COF in one face and low COF in the other face) in an inventive film can be obtained by the addition of the propylene-based polymer to one external layer during the extrusion of the film. In addition, the inventive films can be easily recycled, as all components in the formulation are polyolefins.

It has also been discovered, that unlike EVA copolymers, the propylene-based polymers performs well in blends with polyethylene of much higher melting points such as HDPE (for example, density from 0.941 g/cc to 0.96 g/cc), and MDPE (for example, density from 0.926 g/cc to 0.94 g/cc), each with melting point typically from 120°C to 130°C.

Propylene-based Polymer

The propylene-based polymers of this invention include, but are not limited to, propylene/$\alpha$-olefin interpolymers, propylene/ethylene interpolymers, and preferably propylene/ethylene copolymers. Preferred $\alpha$-olefins include 1-butene, 1-hexene and 1-octene. Propylene-based polymers include, but are not limited to, VERSIFY Elastomers and Plastomers (available from The Dow Chemical Company), VISTAMAXX polymers (ExxonMobil Chemical Co.), LICOCENE polymers (Clariant), EASTOFLEX polymers (Eastman Chemical Co.), REXTAC polymers (Hunstman), VESTOPLAST polymers (Degussa), and PROFAX polymers (Montell).

In one embodiment, the propylene-based polymer has a melt flow rate (MFR) greater than, or equal to, 0.1 g/10 min, preferably greater than, or equal to, 0.2 g/10 min, more preferably greater than, or equal to, 0.5 g/10 min, and even more preferably greater than, or equal to, 0.8 g/10 min. In another embodiment, the propylene-based polymer has a melt flow rate (MFR) less than, or equal to, 50, preferably less than, or equal to 20, more preferably less than, or equal to 12 g/10 min, and even more preferably less than, or equal to 6 g/10min. The MFR is measured according to ASTM D-1238 (2.16 kg, 230°C). In a preferred embodiment, the propylene-based polymer is a propylene/ethylene interpolymer, and more preferably a propylene/ethylene copolymer.

In one embodiment, the propylene-based polymer has a density less than, or equal to, 0.92 g/cc, preferably less than, or equal to, 0.91 g/cc, and more preferably less than, or equal to, 0.90 g/cc (1 cc = 1 cm$^3$). In another embodiment, the propylene-based polymer has a density greater than, or equal to, 0.84 g/cc, preferably greater than, or equal to, 0.85 g/cc, and more preferably greater than, or equal to, 0.86 g/cc. In a preferred embodiment, the propylene-based polymer is a propylene/ethylene interpolymer, and more preferably a propylene/ethylene copolymer.

In one embodiment, the propylene-based polymer has a molecular weight distribution less than, or equal to, 5, and preferably less than, or equal to, 4.5, and more preferably less than, or equal to 4. In one embodiment, the molecular weight distribution is greater than, or equal to, 1.2, preferably greater than, or equal to, 1.5, more preferably greater than, or equal to 2. In a preferred embodiment, the propylene-based polymer is a propylene/ethylene interpolymer, and more preferably a propylene/ethylene copolymer.

In one embodiment, the propylene-based polymer comprises propylene, and typically, ethylene, and/or one or more unsaturated comonomers, and is characterized as having at least one, preferably more than one, of the following properties: (i) 13C NMR peaks corresponding to a regio-error at about 14.6 and about 15.7 ppm, the peaks of about equal intensity, (ii) a skewness index, $S_{ix}$, greater than -1.20, (iii) a DSC curve with a $T_{me}$ that remains essentially the same, and a $T_{Max}$ that decreases as the amount of comonomer (i.e., units derived from ethylene and/or the unsaturated comonomer(s)) in the interpolymer is increased, and (iv) an X-ray diffraction pattern that reports more gamma-form crystals than a comparable interpolymer prepared with a Ziegler-Natta catalyst. It is noted that in property (i) the distance between the two 13C NMR peaks is about 1.1 ppm. In a preferred embodiment, the propylene-based polymer is a propylene/ethylene interpolymer, and more preferably a propylene/ethylene copolymer. See U.S. Patent 6,919,407.

In one embodiment, the propylene-based polymer is characterized by property (i).

In one embodiment, the propylene-based polymer is characterized by property (ii).

In one embodiment, the propylene-based polymer is characterized by property (iii).

In one embodiment, the propylene-based polymer is characterized by property (iv).

In one embodiment, the propylene-based polymer is characterized by properties (i), (ii), (iii) and (iv).

In another embodiment, the propylene-based polymer is characterized by at least three of properties (i), (ii), (iii) and (iv), for example, (i), (iii) and (iv), or (i), (ii) and (iii).

In another embodiment, the propylene-based polymer is characterized by at least two of properties (i), (ii), (iii) and (iv), for example, (i) and (iv), or (i), and (iii), or (i), and (ii), or (iii) and (iv), or (iii) and (ii), or (iv) and (ii).

With respect to the X-ray property of subparagraph (iv) above, a "comparable" interpolymer is one having the same monomer composition within 10 weight percent, and the same $M_w$ (weight average molecular weight) within 10 weight percent. For example, if an inventive propylene/ethylene/1-hexene interpolymer is 9 weight percent ethylene and 1 weight percent 1-hexene, and has a Mw of 250,000, then a comparable polymer would have from 8.1 to 9.9 weight percent ethylene, from 0.9 to 1.1 weight percent 1-hexene, and a Mw from 225,000 to 275,000, and prepared with a Ziegler-Natta catalyst. See U.S. Patent 6,919,407.

In one embodiment, the propylene-based polymer comprises greater than 50 weight percent propylene (based on the weight of the polymer) and at least 5 weight percent ethylene (based on the weight of the polymer), and has 13C NMR peaks, corresponding to a region error, at about 14.6 and 15.7 ppm, and the peaks are of about equal intensity (for example, see U.S. Patent 6,919,407, column 12, line 64 to column 15, line 51). In a preferred embodiment, the propylene-based polymer is a propylene/ethylene copolymer.

In one embodiment, the propylene-based polymer comprises the following: (A) at least 60 weight percent (wt%) units derived from propylene (based on the total weight of polymer), and (B) from greater than zero to 40 wt% units derived from ethylene (based on the total weight of polymer). The propylene-based polymer is further characterized by at least one of the following properties: (1) a g' ratio of less than 1, preferably less than 0.95, more preferably less than 0.85 and even more preferably less than 0.80, measured at polymer number average molecular weight (Mn), (2) a relative compositional drift of less than 50%, and (3) propylene chain segments having a chain isotacticity triad index of at least 70 mole percent. See International Publication No. WO 2009/067337.

In one embodiment, the propylene-based polymer is characterized by property (1).

In one embodiment, the propylene-based polymer is characterized by property (2).

In one embodiment, the propylene-based polymer is characterized by property (3).

In one embodiment, the propylene-based polymer is characterized by properties (1), (2) and (3).

In another embodiment, the propylene-based polymer is characterized by at least two of properties (1), (2) and (3), for example, (1) and (2), or (1), and (3), or (2), and (3).

The g' ratio is the ratio of the intrinsic viscosity value for the branched propylene-based polymer, and for example, a propylene/ethylene copolymer, divided by the intrinsic viscosity value for the linear propylene-ethylene copolymer having similar ethylene content, i.e., polymer density, and similar molecular weight, i.e., melt flow rate. "Similar" means within twenty percent (20%) of each value. These g' ratios are calculated at the number average molecular weight (Mn) and weight average molecular weight values ($M_w$): g' = (IVbranched/IVlinear). The IV values are obtained at Mn and Mw values. See International Publication No. WO 2009/067337.

"Substantially isotactic propylene sequences," and similar terms, mean that the sequences have an isotactic triad (mm) mole fraction, measured by 13C NMR, greater than a 0.70, preferably greater than a 0.80, more preferably greater than a 0.85, and most preferably greater than a 0.90. Isotactic triad measurements are well known in the art, and are described in, for example, USP 5,504,172 and WO 00/01745 that refer to the isotactic sequence in terms of a triad unit in the copolymer molecular chain determined by 13C NMR spectra. See International Publication No. WO 2009/067337.

In one embodiment, the propylene-based polymer, preferably a propylene/ethylene interpolymer, and more preferably a propylene/ethylene copolymer, and is characterized by at least one of the following properties:

(a) a weight average molecular weight (Mw) of at least 50,000 grams per mole (g/mol);

(b) an Mw/Mn of less than 4;

(c) a critical shear rate at the onset of surface melt fracture (OSMF) of at least 4,000 sec$^{-1}$;

(d) an 110/12 at 230°C greater than or equal to ($\geq$) 5.63;

(e) a nominal weight percent crystallinity from greater than 0 to 40 wt%; and,

(f) a single melting point as measured by differential scanning calorimetry (DSC). See International Publication No. WO 2009/067337.

In one embodiment, the propylene-based polymer is characterized by property (a).

In one embodiment, the propylene-based polymer is characterized by property (b).

In one embodiment, the propylene-based polymer is characterized by property (c).

In one embodiment, the propylene-based polymer is characterized by property (d).

In one embodiment, the propylene-based polymer is characterized by property (e).

In one embodiment, the propylene-based polymer is characterized by property (f).

In one embodiment, the propylene-based polymer is characterized by properties (a), (b), (c), (d), (e) and (f).

In one embodiment, the propylene-based polymer is further characterized by at two or more properties (a) through (f).

In one embodiment, the propylene-based polymer is further characterized by at three or more properties (a) through (f).

In one embodiment, the propylene-based polymer is further characterized by at four or more properties (a) through (f).

In one embodiment, the propylene-based polymer is further characterized by at five or more properties (a) through (f).

In one embodiment, the propylene-based polymer is further characterized by at least one of (b) through (f).

In one embodiment, the propylene-based polymer is further characterized by at least one of (e) and (f).

In one embodiment, the propylene-based polymer is characterized as comprising the following: (A) from 60 to less than 100 weight percent, preferably from 80 to 99 weight percent, and more preferably from 85 to 99 weight percent, units derived from propylene (based on the weight of the polymer), and (B) from greater than zero to 40 weight percent, preferably from 1 to 20 weight percent, more preferably from 2 to 16 weight percent, and even more preferably from 3 to 10 weight percent, units derived from at least one of ethylene and/or a C4-30 $\alpha$-olefin (based on the weight of the polymer). The polymer further contains an average of at least 0.001, preferably an average of at least 0.005 and more preferably an average of at least 0.01, long chain branches/1000 total carbons. The maximum number of long chain branches in the propylene interpolymer is not critical to the definition of this invention, but typically it does not exceed 3 long chain branches/1000 total carbons. See International Publication No. WO 2009/067337.

In one embodiment, the propylene-based polymer is characterized as having an 110/12 at 230°C (as determined by ASTM D-1238) greater than or equal to ($\geq$) 5.63, preferably from 6.5 to 15, and more preferably from 7 to 10. The molecular weight distribution (Mw/Mn or MWD), measured by gel permeation chromatography (GPC), is defined by the equation: Mw/Mn $\leq$ (110/12) - 4.63, and is preferably between 1.5 and 2.5. The 110/12 ratio indicates the degree of long chain branching, i.e., the larger the 110/12 ratio, the more long chain branching in the polymer. Such propylene-based polymers have a highly unexpected flow property, where the I10/I2 value at 230°C of the polymer is essentially independent of the polydispersity index (i.e., Mw/Mn) of the polymer. This is contrasted with linear propylene-based polymers having rheological properties, such that, to increase the 110/12 value, the polydispersity index must also be increased.

In one embodiment, the propylene-based polymer is further characterized as having a resistance to melt fracture. An apparent "shear stress versus apparent shear rate" plot is used to identify the melt fracture phenomena. According to Ramamurthy, in the Journal of Rheology, 30(2), 337-357, 1986, above a certain critical flow rate, the observed extrudate irregularities may be broadly classified into two main types: surface melt fracture and gross melt fracture. Surface melt fracture occurs under apparently steady flow conditions, and ranges in detail from loss of specular film gloss to the more severe form of "sharkskin." The onset of surface melt fracture (OSMF) is characterized at the beginning of losing extrudate gloss, at which the surface roughness of the extrudate can be detected by 40 times magnification. See International Publication No. WO 2009/067337.

A propylene-based polymer may comprise a combination of two or more embodiments as described herein.

A propylene/$\alpha$-olefin interpolymer may comprise a combination of two or more embodiments as described herein.

A propylene/ethylene interpolymer may comprise a combination of two or more embodiments as described herein.

A propylene/ethylene copolymer may comprise a combination of two or more embodiments as described herein.

Ethylene/$\alpha$-olefin Interpolymers

The first ethylene/a-olefin interpolymer and the second ethylene/a-olefin interpolymer are each independently described in the embodiments below.

In one embodiment, the ethylene/a-olefin interpolymer has a density less than, or equal to, 0.94 g/cm$^3$, preferably less than, or equal to, 0.935 g/cm$^3$, and more preferably less than, or equal to, 0.93 g/cm$^3$. Preferably the ethylene/a-olefin interpolymer is an ethylene/a-olefin copolymer.

In one embodiment, the ethylene/a-olefin interpolymer has a density greater than, or equal to, 0.89 g/cm$^3$, preferably greater than, or equal to, 0.90 g/cm$^3$, and more preferably greater than, or equal to, 0.91 g/cm$^3$. Preferably the ethylene/a-olefin interpolymer is an ethylene/a-olefin copolymer.

In one embodiment, the ethylene/a-olefin interpolymer has a melt index, $I_2$, greater than, or equal to, 0.2 g/10 min, preferably greater than, or equal to, 0.5 g/10 min, and more preferably greater than, or equal to, 1 g/10 min. Preferably the ethylene/a-olefin interpolymer is an ethylene/a-olefin copolymer.

In another embodiment, the ethylene/a-olefin interpolymer has a melt index, $I_2$, less than, or equal to, 20 g/10 min, preferably less than, or equal to, 10 g/10 min, and more preferably less than, or equal to, 5 g/10 min, and even more preferably less than, or equal to, 3 g/10 min. Preferably the ethylene/a-olefin interpolymer is an ethylene/a-olefin copolymer.

In a preferred embodiment, the $\alpha$-olefin is a C3-C20 $\alpha$-olefin, a preferably a C4-C20 $\alpha$-olefin, and more preferably a C4-C12 $\alpha$-olefin, and even more preferably a C4-C8 $\alpha$-olefin and most preferably C6-C8 $\alpha$-olefin. The $\alpha$-olefins include, but are not limited to, propylene 1-butene, 1-pentene, 1-hexene, 4-methyl-1-pentene, 1-heptene, and 1-octene. Preferred $\alpha$-olefins include propylene, 1-butene, 1-pentene, 1-hexene, and 1-octene. Especially preferred $\alpha$-olefins include 1-hexene and 1-octene, and more preferably 1-octene. Preferred copolymers include EB, EH and EO copolymers, and most preferred copolymers are EH and EO. Suitable ethylene/a-olefin copolymers include, but are not limited to, the DOWLEX Polyethylene Resins available from The Dow Chemical Company.

In a preferred embodiment, the ethylene-based interpolymer is a linear ethylene-based interpolymer, and preferably a heterogeneously branched linear ethylene-based interpolymer. The term "linear ethylene-based interpolymer," as used herein, refers to an interpolymer that lacks long-chain branching, or lacks measurable amounts of long chain branching, as determined by techniques known in the art, such as NMR spectroscopy (for example 1C NMR as described by Randall, Rev. Macromal. Chem. Phys., C29 (2&3), 1989, pp. 285-293. Some examples of long-chain branched interpolymers are described in U.S. Patent Nos. 5,272,236 and 5,278,272. As known in the art, the heterogeneously branched linear and homogeneously branched linear interpolymers have short chain branching due to the incorporation of comonomer into the growing polymer chain.

Heterogeneously branched interpolymers have a short chain branching distribution, in which the polymer molecules do not have the same comonomer-to-ethylene ratio. For example, heterogeneously branched LLDPE polymers typically have a distribution of branching, including a highly branched portion (similar to a very low density polyethylene), a medium branched portion (similar to a medium branched polyethylene) and an essentially linear portion (similar to linear homopolymer polyethylene). These linear interpolymers lack long chain branching, or measurable amounts of long chain branching, as discussed above.

The terms "homogeneous" and "homogeneously-branched" are used in reference to an ethylene/a-olefin polymer (or interpolymer), in which the α-olefin comonomer is randomly distributed within a given polymer molecule, and all of the polymer molecules have the same or substantially the same comonomer-to-ethylene ratio.

The ethylene/a-olefin interpolymer may comprise a combination of two or more embodiments as described herein.

The ethylene/a-olefin copolymer may comprise a combination of two or more embodiments as described herein.

Amide Compounds

The amide compounds contain at least 12, preferably at least 15, and more preferably at least 18 carbon atoms. An amide compound comprises at least one amide group, and typically one amide group.

In one embodiment, the amide compound comprises from 10 to 40, or from 12 to 35, or from 15 to 30 carbon atoms.

In one embodiment, the amide compound comprises the following: one nitrogen atom; one oxygen atom; from 10 to 40, or from 12 to 35, or from 15 to 30 carbon atoms; and from 15 to 60, or from 25 to 55, or from 30 to 50 hydrogen atoms.

In one embodiment, the amide compound is selected from one or more compounds of Formula I:

$$H_2NC(O)\text{-}(CH_2)n\text{-}CH=CH\text{-}(CH_2)_7\text{-}CH_3 \qquad \text{(Formula I)},$$

where C is carbon, N is nitrogen, O is oxygen, H is hydrogen, and n is from 5 to 13, and preferably from 7 to 11. In a further embodiment, the amide compound is selected from compounds of Formula I.

In one embodiment, the amide compound is 13-docosenamide or erucamide (C22:1 amide with the formula $C_{22}H_{43}NO$).

In one embodiment, the amide compound is a 9-octadecenamide (C18:1 amide with the formula $C_{18}H_{35}NO$).

In one embodiment, the amide compound is selected from 13-docosenamide (C22:1 amide with the formula $C_{22}H_{43}NO$), 9-octadecenamide (C18:1 amide with the formula $C_{18}H_{35}NO$), or mixtures thereof.

In one embodiment, the amide compound is used in an amount to decrease the COF of a film layer to a value of 0.3 or lower.

In one embodiment, the amide compound is present in an amount from 50 ppm 500 ppm, or from 75 ppm to 400 ppm, or from 100 ppm to 300 ppm, based on the weight of the second composition.

In one embodiment, the amide compound is present in an amount from 200 ppm 1500 ppm, or from 300 ppm to 1200 ppm, or from 400 ppm to 1000 ppm, based on the weight of the second composition.

In one embodiment, the amide compound is present in an amount from 50 ppm 500 ppm, or from 75 ppm to 400 ppm, or from 100 ppm to 300 ppm, based on the sum weight of the film compositions for the respective film layers.

An amide compound may comprise a combination of two or more embodiments as described herein.

Additives

An inventive composition may comprise at least one additive. Stabilizers and antioxidants may be added to a resin formulation to protect the resin from degradation, caused by reactions with oxygen, which are induced by such things as heat, light, or residual catalyst from the raw materials. Other additives include, but are not limited to, ultraviolet light absorbers, antistatic agents, pigments, dyes, nucleating agents, fillers, fire retardants, plasticizers, processing aids, and anti-blocking agents. In one embodiment, the film compositions do not contain an adhesive.

Preparation of Film

A film of the invention can be prepared by selecting the polymers suitable for making each layer, forming a film of each layer, and bonding the layers, or coextruding, or casting one or more layers. Desirably, the film layers are bonded continuously over the interfacial area between film layers. In a preferred embodiment, the inventive films are formed using a blown film process or a cast film process. Suitable blown film processes are described, for example, in The Encyclopedia of Chemical Technology, Kirk-Othmer, Third Edition, John Wiley & Sons, New York, 1981, Vol. 16, pp. 416-417 and Vol. 18, pp. 191-192. Suitable coextrusion techniques and requirements are described by Tom I. Butler in Film Extrusion Manual: Process, Materials, Properties, "Coextrusion", Ch. 4, pp. 31-80, TAPPI Press, (Atlanta, GA. 1992).

The inventive film may be used in existing forms. The films can also be printed and used for packaging purposes. In certain embodiments the films may be laminated to other substrates to produce laminates with specific property requirements. In certain embodiments, the films may also be metallized to improve the $O_2TR$ and water vapor barrier. In other embodiments, the films may also be coextruded with barrier materials, such as polyvinylidene barrier resins or polyamides or EVOH resins.

For each layer, typically, it is suitable to extrusion blend, melt blend, or dry blend, the components and any additional additives, such as stabilizers and polymer processing aids. The blending should be carried out in a manner, such that an adequate degree of dispersion is achieved. The conditions of an extrusion blending will necessarily vary, depending upon the components. One skilled of ordinary in the art can select the proper conditions (for example, screw design and temperature) to achieve a good mixing.

After blending, a film structure is formed. Film structures may be formed by conventional fabrication techniques, for example, bubble extrusion, biaxial orientation processes (such as tenter frames or double bubble processes), cast/sheet extrusion, coextrusion and lamination. One of ordinary skill in the art can select the proper conditions for the film formation. The melt temperature during film forming will depend on the film components. Some film manufacturing techniques are disclosed in U.S. 6,723,398 (Chum et al.).

The inventive films may be made to any thickness depending upon the application. In one embodiment, the film has a total thickness of from 10 to 500 $\mu$m (microns), preferably from 15 to 300 $\mu$m (microns), more preferably from 20 to 200 $\mu$m (microns). Some preferred packaging applications include heavy duty shipping sacks, and packaging for personal care products.

DEFINITIONS

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure) and the term interpolymer as defined hereinafter.

The term "interpolymer," as used herein, refers to polymers prepared by the polymerization of at least two different types of monomers. The generic term interpolymer thus includes copolymers (employed to refer to polymers prepared from two different types of monomers) and polymers prepared from more than two different types of monomers.

The term "ethylene-based polymer," as used herein, refers to a polymer that comprises, in polymerized form, a majority weight percent of polymerized ethylene (based on the weight of the polymer).

The term "ethylene-based interpolymer," as used herein, refers to a polymer that comprises, in polymerized form, a majority weight percent of ethylene (based on the weight of the interpolymer), and at least one comonomer.

The term "ethylene/$\alpha$-olefin interpolymer," as used herein, refers to a polymer that comprises, in polymerized form, a majority weight percent of ethylene (based on the weight of the interpolymer), and an $\alpha$-olefin.

The term "ethylene/$\alpha$-olefin copolymer," as used herein, refers to a polymer that comprises, in polymerized form, a majority weight percent of ethylene (based on the weight of the copolymer), and an $\alpha$-olefin, as the only monomer types.

The term, "propylene-based polymer," as used herein, refers to a polymer that comprises, in polymerized form, a majority weight percent of propylene (based on the weight of the polymer).

The term, "propylene-based interpolymer," as used herein, refers to a polymer that comprises, in polymerized form, a majority weight percent of propylene (based on the weight of interpolymer), and at least one comonomer.

The term "propylene/$\alpha$-olefin interpolymer," as used herein, refers to a polymer that comprises, in polymerized form, a majority weight percent of propylene (based on the weight of the interpolymer), and an $\alpha$-olefin.

The term "propylene/$\alpha$-olefin copolymer," as used herein, refers to a polymer that comprises, in polymerized form, a majority weight percent of propylene (based on the weight of the copolymer), and an $\alpha$-olefin, as the only monomer types.

The term "propylene/ethylene interpolymer," as used herein, refers to a polymer that comprises, in polymerized form, a majority weight percent of propylene (based on the weight of the interpolymer), and ethylene.

The term "propylene/ethylene copolymer," as used herein, refers to a polymer that comprises, in polymerized form, a majority weight percent of propylene (based on the weight of the copolymer), and ethylene, as the only monomer types.

The term "polymer mixture," as used herein, refers to composition or blend comprising two or more polymers. Such a polymer mixture may or may not be miscible (not phase separated at the molecular level). Such a polymer mixture may or may not be phase separated. Such a polymer mixture may or may not contain one or more domain configurations, as determined from transmission electron microscopy, light scattering, x-ray scattering, and other methods known in the art. A polymer mixture may be formed by a series of two or more "in-reactor" polymerizations (for example, an "in-reactor" blend), or from mixing separately polymerized polymers (for example, a "post-reactor" blend).

The term "film," as used herein, refers to a film structure with at least one layer or ply.

The term "multilayered film," as used herein, refers to a film structure with more than one layer or ply.

The term "core layer," as used herein, in reference to a film structure, refers to a film layer that is co-contiguous with another film layer on each surface.

The terms "skin" or "skin layer," as used herein, refer to an outermost, exterior film layer.

The term "about," in reference to the position of 13C NMR peaks, refers to values within $\pm$ 10% of the given numerical value, unless otherwise stated.

The terms "comprising," "including," "having," and their derivatives, are not intended to exclude the presence of any additional component, step or procedure, whether or not the same is specifically disclosed. In order to avoid any doubt, all compositions claimed through use of the term "comprising," may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

TEST METHODS

The densities of the propylene-based polymers and the ethylene-based polymers are measured in accordance with ASTM D-792-08.

The melt flow rate (MFR) of an propylene-based polymer is measured in accordance with ASTM D-1238-04, condition 230°C/2.16 kg. Melt index (12) of an ethylene-based polymer is measured in accordance with ASTM D-1238-04, condition 190°C/2.16 kg. Melt index (15) of an ethylene-based polymer is measured in accordance with ASTM D-1238-04, condition 190°C/5.0 kg. Melt index (110) of an ethylene-based polymer is measured in accordance with ASTM D-1238-04, condition 190°C/10.0 kg. High load melt index (121) of an ethylene-based polymer is measured in accordance with ASTM D-1238-04, condition 190°C/21.0 kg.

*Coefficient of Friction (COF)*

The COF for each film was measured in accordance with ASTM D1894, using a "slip and friction" machine from Testing Machine Inc.. The ASTM D1894 test method used a sled (200g, "6 cm x 6 cm") at a test speed of 150 mm per min, with a "10 N load cell" attached to a tensile tester. The force measured on load cell is the force acting down on film. This force is the coefficient of friction. The film specimen was conditioned at 23 +/- 2°C and 50 +/- 5% relative humidity, for at least 40 hours before testing. The coefficient of friction can be measured "film-to-film" or "film-to-metal." In the first case, both the sled and the sliding plate are covered with the film to be tested. Each film specimen was attached to its respective surface using an adhesive tape to ensure that film remained stationary. A minimum of five specimen pairs were cut from a film sample. The size of each specimen was "28.0 cm x 15.2 cm" for the sliding plate, and "15.2 cm x 14.0 cm" for the sled.

The coefficient of friction in each film could be measured in any of the two skin layers. For coextruded films, the "film-to-film" coefficient of friction is usually measured between film surfaces of the same skin layer (for example, "Layer A to Layer A," or "Layer B to Layer B," as discussed in the experimental section.)

The "coefficient of friction (COF)," also known as a "frictional coefficient" or "friction coefficient," is a dimensionless scalar value, which describes the ratio of the force of friction between two bodies and the force pressing them together.

"Static friction" is friction between two solid objects that are not moving relative to each other. For example, static friction can prevent an object from sliding down a sloped surface. The coefficient of static friction, typically denoted as $\mu s$, is usually higher than the coefficient of kinetic friction.

"Kinetic (or dynamic) friction" occurs when two objects are moving relative to each other and rub together (like a sled on the ground). The coefficient of kinetic friction is typically denoted as $\mu k$, and is usually less than the coefficient of static friction for the same materials.

*Gel Permeation Chromatography*

For the propylene-based polymers, the molecular weight distribution of the polymers can be determined using Gel Permeation Chromatography (GPC) on a Polymer Laboratories PL- GPC-220 high temperature chromatographic unit, equipped with four linear, mixed bed columns (Polymer Laboratories (20-$\mu$m (micron) particle size)). The oven temperature is at 160°C, with the auto sampler hot zone at 160°C, and the warm zone at 145°C. The solvent is 1,2,4-trichlorobenzene containing "200 ppm 2,6-di-t-butyl-4-methylphenol." The flow rate is 1.0 milliliter/minute, and the injection size is 100 microliters. About 0.2 percent, by weight, solutions of the samples are prepared for injection, by dissolving the sample in nitrogen purged 1,2,4-trichlorobenzene, containing 200 ppm 2,6-di-t-butyl-4-methylphenol, for 2.5 hrs at 160°C, with gentle mixing.

The molecular weight determination is deduced by using ten narrow molecular weight distribution, polystyrene standards (from Polymer Laboratories, EasiCal PSI, ranging from 580-7,500,000 g/mole) in conjunction with their elution volumes. The equivalent molecular weights for the propylene-based polymers are determined by using appropriate Mark-Houwink coefficients for polypropylene (as described by Th. G. Scholte, N. L. J. Meijerink, H. M. Schoffeleers, and A. M. G. Brands, J. Appl. Polym. Sci., 29, 3763-3782 (1984)), and polystyrene (as described by E. P. Otocka, R. J. Roe, N. Y. Hellman, P. M. Muglia, Macromolecules, 4, 507 (1971)) in the Mark-Houwink equation:

$$\{N\} = KM^a,$$

where $K_{pp}$ = 1.90E-04, $a_{pp}$ = 0.725, $K_{ps}$ = 1. 26E-04, and $a_{ps}$ = 0.702.

The average molecular weights and molecular weight distributions for ethylene-base polymers can be determined with a chromatographic system consisting of either a Polymer Laboratories Model PL-210 or a Polymer Laboratories Model PL-220. The column and carousel compartments are operated at 140°C for ethylene-based polymers. The columns are three Polymer Laboratories "10-$\mu$m (micron) Mixed-B" columns. The solvent is 1,2,4 trichlorobenzene. The samples are prepared at a concentration of 0.1 gram of polymer powder in 50 milliliters of solvent. The solvent used to prepare the samples contains "200 ppm of butylated hydroxytoluene (BHT)." Samples are prepared by agitating lightly for two hours at 160°C. The injection volume is 100 microliters and the flow rate is 1.0 milliliters/minute. Calibration of the GPC column set is performed with narrow molecular weight distribution polystyrene standards, purchased from Polymer Laboratories (UK). The polystyrene standard peak molecular weights are converted to polyethylene molecular weights using the following equation (as described in Williams and Ward, J. Polym. Sci., Polym. Let., 6, 621 (1968)).

$$Mpolyethylene = A \times (Mpolystyrene)^B,$$

where M is the molecular weight, A has a value of 0.4315 and B is equal to 1.0.

*Differential Scanning Calorimetry*

The term "crystallinity" refers to the regularity of the arrangement of atoms or molecules forming a crystal structure. Polymer crystallinity can be examined using DSC. The term "$T_{me}$" means the temperature at which the melting ends, and the term "$T_{max}$" means the peak melting temperature, both as determined by one of ordinary skill in the art from DSC analysis, using data from the final heating step. General principles of DSC measurements, and applications of DSC to studying semi-crystalline polymers, are described in standard texts (for example, E.A. Turi, ed., Thermal Characterization of Polymeric Materials, Academic Press, 1981).

Differential Scanning Calorimetry (DSC) analysis is determined using a model Q1000 DSC from TA Instruments, Incorporated. The calibration of the DSC is done as follows. First, a baseline is obtained by running the DSC from -90°C to 290°C, without any sample in the aluminum DSC pan. Then seven milligrams of a fresh indium sample is analyzed by heating the sample to 180°C, cooling the sample to 140°C, at a cooling rate of 10°C/min, followed by keeping the sample isothermally at 140°C for one minute, followed by heating the sample from 140°C to 180°C, at a heating rate of 10°C/min. The heat of fusion and the onset of melting of the indium sample are determined, and checked to be within "0.5°C" from 156.6°C for the onset of melting, and within "0.5 J/g" from 28.71 J/g for the heat of fusion. Then deionized water is analyzed by cooling a small drop of fresh sample in the DSC pan from 25°C to -30°C, at a cooling rate of 10°C/min. The sample is kept isothermally at -30°C for two minutes, and heated to 30°C, at a heating rate of 10°C/min. The onset of melting is determined and checked to be within "0.5°C" from 0°C.

The propylene-based samples are pressed into a thin film at a temperature of 190°C. About five to eight milligrams of sample is weighed out, and placed in the DSC pan. The lid is crimped on the pan to ensure a closed atmosphere. The sample pan is placed in the DSC cell, and heated at a high rate of about 100°C/min, to a temperature of about 30°C above the melt temperature. The sample is kept at this temperature for about three minutes. Then the sample is cooled at a rate of 10°C/min, to -40°C, and kept isothermally at that temperature for three minutes. Consequently the sample is heated at a rate of 10°C/min, until complete melting. The resulting enthalpy curves are analyzed for peak melt temperature, onset and peak crystallization temperatures, heat of fusion and heat of crystallization, $T_{me}$, $T_{Max}$, and any other DSC parameters of interest.

The factor that is used to convert heat of fusion into nominal weight percent crystallinity is 165 J/g = 100 wt% crystallinity. With this conversion factor, the total crystallinity of a propylene-based copolymer (units: weight percent crystallinity) is calculated as the heat of fusion divided by 165 J/g, and multiplied by 100 percent.

*13C NMR*

The 13C NMR spectroscopy is one of a number of techniques known in the art of measuring comonomer incorporation into a polymer. An example of this technique is described for the determination of comonomer content for ethylene/a-olefin copolymers in Randall (Journal of Macromolecular Science, Reviews in Macromolecular Chemistry and Physics, C29 (2 & 3), 201-317 (1989)). The basic procedure for determining the comonomer content of an olefin interpolymer involves obtaining the 13C NMR spectrum under conditions where the intensity of the peaks, corresponding to the different carbons in the sample, is directly proportional to the total number of contributing nuclei in the sample. Methods for ensuring this proportionality are known in the art, and involve allowance for sufficient time for relaxation after a pulse, the use of gated-decoupling techniques, relaxation agents, and the like.

The relative intensity of a peak, or group of peaks, is obtained in practice from its computer-generated integral. After obtaining the spectrum and integrating the peaks, those peaks associated with the comonomer are assigned. This assignment can be made by reference to known spectra or literature, or by synthesis and analysis of model compounds, or by the use of isotopically labeled comonomer. The mole percent comonomer can be determined by the ratio of the integrals corresponding to the number of moles of comonomer to the integrals corresponding to the number of moles of all of the monomers in the interpolymer, as described in Randall, for example.

The data is collected using a Varian UNITY Plus 400 MHz NMR spectrometer, corresponding to a 13C resonance frequency of 100.4 MHz. Acquisition parameters are selected to ensure quantitative 13C data acquisition in the presence of the relaxation agent. The data is acquired using gated 1H decoupling, 4000 transients per data file, a 6 sec pulse repetition delay, spectral width of 24,200 Hz, and a file size of 32K data points, with the probe head heated to 130°C. The sample is prepared by adding approximately 3 mL of a "50/50 mixture of tetrachloroethane-d2/orthodichlorobenzene that is 0.025M in chromium acetylacetonate (relaxation agent)" to 0.4 g sample in a 10 mm NMR tube. The headspace of the tube is purged of oxygen by displacement with pure nitrogen. The sample is dissolved and homogenized by heating the tube and its contents to 150°C, with periodic refluxing initiated by heat gun.

Following data collection, the chemical shifts are internally referenced to the mmmm pentad at 21.90 ppm. Isotacticity at the triad level (mm) is determined from the methyl integrals representing the mm triad (22.5 to 21.28 ppm), the mr triad (21.28-20.40 ppm), and the rr triad (20.67-19.4 ppm). The percentage of mm tacticity is determined by dividing the intensity of the mm triad by the sum of the mm, mr, and rr triads. For propylene-ethylene copolymers, the integral regions are corrected for ethylene and regio-error by subtracting the contribution, using standard NMR techniques, once the peaks have been identified. This can be accomplished, for example, by analyzing a series of copolymers of various levels of monomer incorporation, by literature assignments, by isotopic labeling, or other means which are known in the art.

For certain propylene-based polymers, the mole fraction of propylene insertions resulting in regio-errors is calculated as one half of the sum of the two of methyls, showing up at 14.6 and 15.7 ppm, divided by the total methyls at 14-22 ppm attributable to propylene. The mole percent of the regio-error peaks is the mole fraction times 100.

*Compositional Drift Analysis*

The GPC-FT/IR technique allows for the measurement of fractional polymer compositions as a function of polymer molecular weight. This characterization technique utilizes Gel Permeation Chromatography (GPC) coupled with Fourier Transform Infrared Spectroscopy (FT/IR). For this analysis, a Waters high temperature GPC unit (#150C) is coupled to a Magna System 560 FT/IT (Water Corp, Milford, MA.). The mobile phase or solvent is tetrachloroethylene. The following references described this technique: P.J. Deslauriers, D.C. Rohlfing, E.T. Hsieh, "Quantifying Short Chain Branching in Ethylene 1-Olefin Copolymers using Size Exclusion Chromatography and Fourier Transform Infrared Spectroscopy," Polymer, 43, 159-170 (2002); and R.P. Markovich, L.G. Hazlitt, L. Smith, ACS Symposium Series: Chromatography of Polymers, 521, 270-276 (1993).

The samples are dissolved in tetrachloroethylene, and analyzed on the GPC-FT/IR. The samples are separated by molecular weight fraction, and, as these fractions elute, they are analyzed by the FT/IR. For propylene-based polymers, the infrared spectral region from 2750 to 3050 cm$^{-1}$ is obtained as a function of molecular weight. Within this spectral region, the partial absorbance area at greater than 2940 cm$^{-1}$ is used for the methyl content. From these measurements, one skilled in the art can develop ethylene content calibration curves for comparing the compositional drift of the samples versus the molecular weight distribution. The compositional drift is calculated as the weight percent ethylene content at the 90% cumulative GPC fraction, and at the 10% cumulative GPC fraction. These two ethylene values are subtracted, and the result is then divided by the weight percent ethylene content of the sample. See International Publication No. WO 2009/067337.

*X-Ray Diffraction*

Crystal phases of polymers can be identified with X-ray diffraction (XRD), as different crystal phase has different diffraction peaks. Alpha crystal phase is most commonly seen in PP. When gamma phase coexists, its diffraction peak at about 20 degree (2-theta and copper radiation) can be visualized. The relative amount of different phases can also be evaluated based on the diffraction data.

The samples can be analyzed using a GADDS system from BRUKER-AXS, with a multi-wire, two-dimensional HiStar detector. Samples are aligned with a laser pointer and a video-microscope. Data is collected using copper radiation with a sample to detector distance of 6 cm. X-ray beam is collimated to 0.3mm. A film sample is cut to fit the XRD sample holder and aligned on the holder.

EXPERIMENTAL

The following resins were used in the film compositions described below.

V22 is a propylene/ethylene copolymer having a density from 0.874 to 0.878 g/cc (ASTM D792), and an MFR from 1.6 to 2.4 g/10 min (ASTM D1238 at 230°C/2.16 kg).

V23 is a propylene/ethylene copolymer having a density from 0.8645 to 0.8685 g/cc (ASTM D792), and an MFR from 1.6 to 2.4 g/10 min (ASTM D1238 at 230°C/2.16 kg).

DO45G is a linear low density ethylene/octene copolymer having a density from 0.9180 to 0.9220 g/cc (ASTM D792), and an $I_2$ from 0.85 to 1.15 g/10 min (ASTM D1238 at 190°C, 2.16 kg).

DO85B is a linear low density ethylene/octene copolymer having a density from 0.9170 to 0.9210 g/cc (ASTM D792), and an $I_2$ from 0.85 to 1.05 g/10 min (ASTM D1238 at 190°C, 2.16 kg).

E01B is a polymer mixture comprising a heterogeneously branched ethylene/octene copolymer and a homogeneously branched ethylene/octene copolymer. The polymer mixture has a density from 0.9155 to 0.9195 g/cc (ASTM D792), and an $I_2$ from 0.80 to 1.20 g/10 min (ASTM D1238 at 190°C/2.16 kg).

PE03 is a low density polyethylene (LDPE) having a density from 0.9200 to 0.9240 g/cc (ASTM D792), and an 12 from of 0.25 to 0.35 g/10 min (ASTM D1238 at 190°C, 2.16 kg).

PE57 is a high density polyethylene (HDPE) having a density from 0.9540 to 0.9580 g/cc (ASTM D792), and an $I_2$ from 0.23 to 0.35 g/10 min (ASTM D1238 at 190°C/2.16 kg).

The above polymers were stabilized with one or more anti-oxidants.

White master batch (MB) is a TiO2 concentrate (for example, AMPACET 11853).

Multilayer, coextruded films were formed from compositions containing one or more of the above polymers. Polymer compositions for each film layer are shown in Table 1 below.

Table 1: Composition for Each Film Layer (component amounts are in weight percent, based on the total weight of the composition).

| | A Layer* "low COF" | | | C Layer "Core" | | B Layer "high COF" | | | | |
| | 20%** | | | 60%** | | 20%** | | | | |
| Example | E01B | DO85B | PE57 | DO45G | White MB | DO45G | PE03 | White MB | V23 | V22 |
|---|---|---|---|---|---|---|---|---|---|---|
| 59 control | 70 | 30 | 15 | 85 | | 80 | 20 | | | |
| 60 | 70 | 30 | 15 | 85 | | 71 | 20 | | | 9 |
| 61 | 70 | 30 | 15 | 85 | | 75 | 20 | | | 5 |
| 62 | 70 | 30 | 15 | 80 | 5 | 70 | 20 | 5 | | 5 |
| 63 | 70 | 30 | 15 | 85 | | 77 | 20 | | | 3 |
| 64 | 70 | 30 | 15 | 85 | | 74 | 20 | | 6 | |
| 65 | 70 | 30 | 15 | 85 | | 77 | 20 | | 3 | |

* Each composition used to form Layer A also contained 1000 ppm of a C22-amide compound and 2500 ppm of silica, each ppm based on the total weight of the composition.
** Percentages based on the total film thickness.

Compositions for each film layer were dry blended. The compositions were formed into a blown film using a Carnevalli blown film coextrusion line (three extruders, and each "6 mm diameter," L/D = 27/1, die "200 mm diameter," each extruder temperature ranged from 175°C to 225°C, and each die temperature ranged from 200°C to 250°C). Each blown film was prepared by extruding, blowing, collapsing, and winding the formed film. Each polymer composition was fed into an extruder, where it was melted and homogenized, before being pumped through the circular blown film die. The melted polymer composition formed a continuous tube as it was drawn from the die. The tube was inflated, and simultaneously cooled by rapidly moving air. The tube, also called a "bubble," was then flattened as it passed the collapsing frames, and was drawn through nip rolls and over idler rolls to a winder to form the finished roll of film.

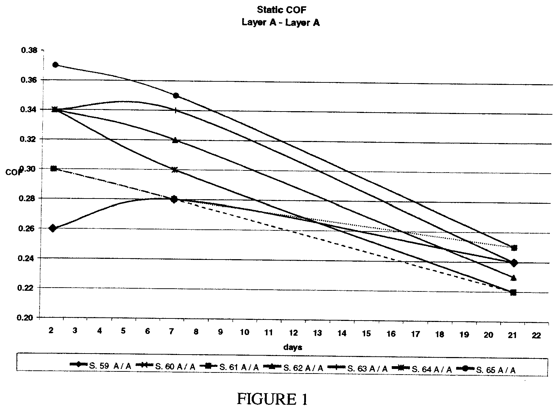

The Coefficient of Friction (Static (ASTM D 1894) film-to-film) was measured on Layer A ("low COF") to Layer A ("low COF") for each film, after 48 hr, 168 hr, and 504 hr of storage at 23°C and 50% relative humidity. The results are shown in Table 2 (see also Figure 1).

TABLE 2

| Aging (hr) | Ex. 59 Control | Ex. 60 | Ex. 61 | Ex. 62 | Ex. 63 | Ex. 64 | Ex. 65 |
|---|---|---|---|---|---|---|---|
| 48 hr Static | 0.26 | 0.30 | 0.30 | 0.34 | 0.34 | 0.34 | 0.37 |
| 168 hr Static | 0.28 | 0.28 | 0.28 | 0.32 | 0.34 | 0.30 | 0.35 |
| 504 hr Static | 0.24 | 0.25 | 0.22 | 0.23 | 0.24 | 0.22 | 0.25 |

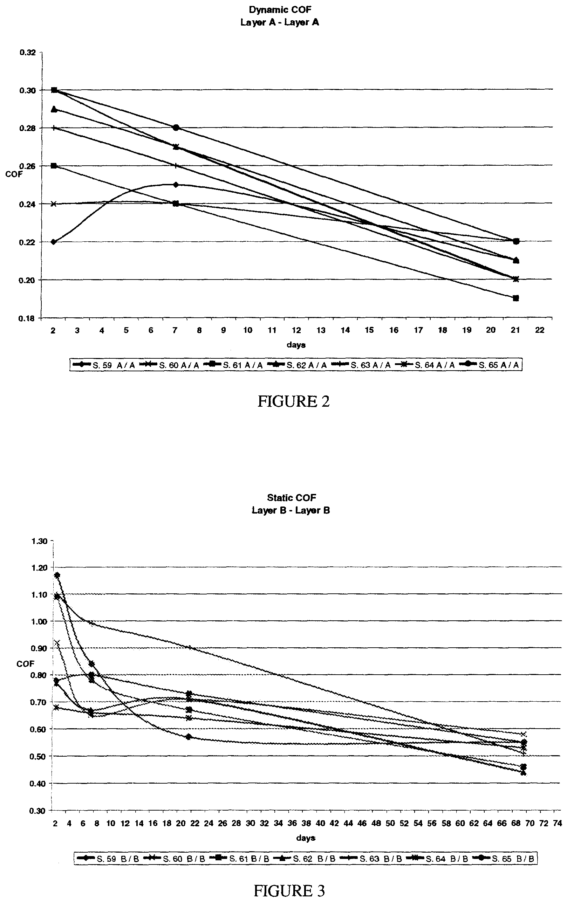

The Coefficient of Friction (Dynamic (ASTM D 1894) film-to-film) was measured on Layer A ("low COF") to Layer A ("low COF") for each film after 48 hr, 168 hr, and 504 hr of storage at 23°C and 50% relative humidity. Results are shown in Table 3 (see also Figure 2).

TABLE 3

| Aging (hr) | Ex. 59 Control | Ex. 60 | Ex. 61 | Ex. 62 | Ex. 63 | Ex. 64 | Ex. 65 |
|---|---|---|---|---|---|---|---|
| 48 hr Dynamic | 0.22 | 0.24 | 0.26 | 0.29 | 0.28 | 0.30 | 0.30 |
| 168 hr Dynamic | 0.25 | 0.24 | 0.24 | 0.27 | 0.26 | 0.27 | 0.28 |
| 504 hr Dynamic | 0.21 | 0.22 | 0.19 | 0.21 | 0.20 | 0.20 | 0.22 |

The Coefficient of Friction (Static (ASTM D 1894) film-to-film) was measured on Layer B ("high COF") to Layer B ("high COF") for each film after 48 hr, 168 hr, 504 hr and 1656 hr of storage at 23°C and 50% relative humidity. Results are shown in Table 4 (see also Figure 3).

TABLE 4

| Aging (hr) | Ex. 59 Control | Ex. 60 | Ex. 61 | Ex. 62 | Ex. 63 | Ex. 64 | Ex. 65 |
|---|---|---|---|---|---|---|---|
| 48 hr Static | 1.17 | 0.92 | 1.09 | 0.77 | 1.10 | 0.68 | 0.78 |
| 168 hr Static | 0.84 | 0.65 | 0.78 | 0.67 | 0.99 | 0.66 | 0.80 |
| 504 hr Static | 0.57 | 0.71 | 0.67 | 0.71 | 0.90 | 0.64 | 0.73 |
| 1656hr Static | 0.55 | 0.58 | 0.46 | 0.44 | 0.51 | 0.53 | 0.55 |

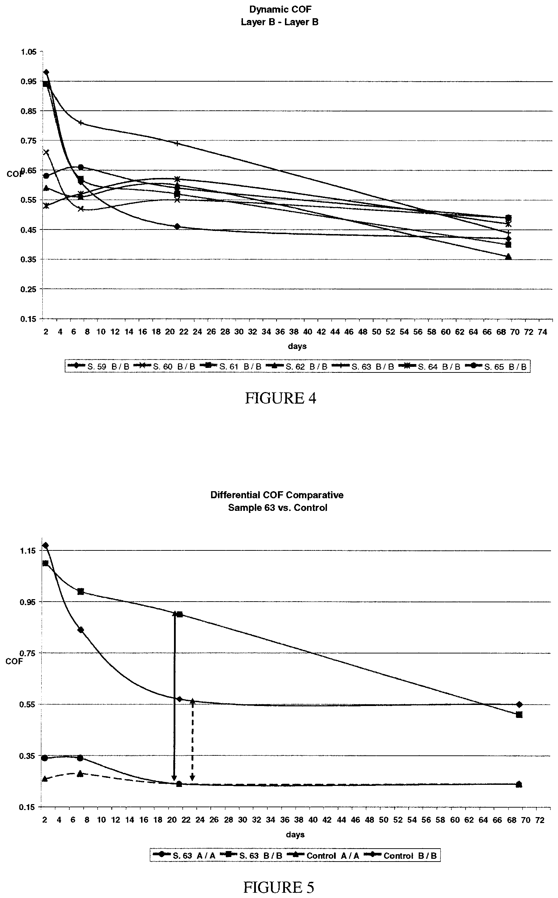

The Coefficient of Friction (Dynamic (ASTM D 1894) film-to-film) was measured on Layer B ("high COF") to Layer B ("high COF") for each film after 48 hr, 168 hr, 504 hr and 1656 hr of storage at 23°C and 50% relative humidity. Results are shown in Table 5 (see also Figure 4).

TABLE 5

| Aging (hr) | Ex. 59 Control | Ex. 60 | Ex. 61 | Ex. 62 | Ex. 63 | Ex. 64 | Ex. 65 |
|---|---|---|---|---|---|---|---|
| 48 hr Dynamic | 0.98 | 0.71 | 0.94 | 0.59 | 0.94 | 0.53 | 0.63 |
| 168 hr Dynamic | 0.61 | 0.52 | 0.62 | 0.56 | 0.81 | 0.57 | 0.66 |
| 504 hr Dynamic | 0.46 | 0.55 | 0.57 | 0.60 | 0.74 | 0.62 | 0.59 |

(continued)

| Aging (hr) | Ex. 59 Control | Ex. 60 | Ex. 61 | Ex. 62 | Ex. 63 | Ex. 64 | Ex. 65 |
|---|---|---|---|---|---|---|---|
| 1656 hr Dynamic | 0.42 | 0.49 | 0.40 | 0.36 | 0.44 | 0.47 | 0.49 |

The Coefficient of Friction Static (ASTM D1894) film to film) of Example 63 was compared to that the control (Example 59) - after 48 hr, 168 hr, 504 hr and 1656 hr of storage 23°C and 50% relative humidity. Results are shown in Table 6 (see also Figure 5).

TABLE 6

| COF Static | 48hr | 168hr | 504hr | 1656 hr |
|---|---|---|---|---|
| Ex. 59 Layer A / Layer A | 0.26 | 0.28 | 0.24 | |
| Ex. 63 Layer A / Layer A | 0.34 | 0.34 | 0.24 | |
| Ex. 59 Layer B / Layer B | 1.17 | 0.84 | 0.57 | 0.55 |
| Ex. 63 Layer B / Layer B | 1.10 | 0.99 | 0.90 | 0.51 |

A differential COF between the two external layers (first layer B, and second layer,

A) was found in all cases where propylene/ethylene copolymer was added in the first layer, B, and slip component was added in second layer, A. It was discovered that from "day 14" to "day 48," after film manufacture, the static COF for layer B for all films, which contained the propylene/ethylene copolymer, was higher (higher is better) than that of the control film, The static COF value was above "0.45" for 70 days after film manufacture. The static COF on layer A (lower is better) for all films was equal to, or lower than, "0.3" after 14 days (the amide compound was added to all films, including the control). In some cases, this COF value was achieved in seven days. For the control film, the static and dynamic COF of layer A undesirably increased during the first seven days after film manufacture, and thus the differential in COF between the two film faces of this film was reduced. As shown in Figure 5, an inventive film maintained a greater COF differential for about 60 days after manufacture, as compared to the control.

Although the invention has been described in considerable detail in the preceding examples, this detail is for the purpose of illustration, and is not to be construed as a limitation on the invention as described in the following claims.

**Claims**

1.  A film comprising at least two layers, a first layer and a second layer,
    wherein the first layer is formed from a first composition comprising

    A) a propylene-based polymer present in an amount of from greater than, or equal to, 1 weight percent to an amount of from less than, or equal to 20 weight percent, based on the weight of the first composition,
    B) a first ethylene/a-olefin interpolymer present in an amount of from less than, or equal to, 99 weight percent to an amount of greater than, or equal to 50 weight percent, based on the weight of the first composition, and
    C) optionally a LDPE homopolymer with a density from 0.91 to 0.93 g/cc, as measured in accordance with ASTM D-792-08, and a melt index (12) from 0.2 to 6 g/10 min, as measured in accordance with ASTM D-1238-04, condition 190°C/2.16 kg; and

    wherein the second layer is formed from a second composition comprising:

    D) a second ethylene/a-olefin interpolymer,
    E) optionally a LDPE homopolymer with a density from 0.91 to 0.93 g/cc, as measured in accordance with ASTM D-792-08, and a melt index (12) from 0.2 to 6 g/10 min, =as measured in accordance with ASTM D-1238-04, condition 190°C/2.16 kg,
    F) optionally a first polymer mixture comprising a homogeneously branched ethylene/a-olefin interpolymer, and a heterogeneously branched ethylene/a-olefin interpolymer, and wherein the first polymer mixture has a density from 0.90 to 0.93 g/cc, as measured in accordance with ASTM D-792-08, and a melt index (12) from 0.5 to 5 g/10 min, as measured in accordance with ASTM D-1238-04, condition 190°C/2.16 kg, and

G) at least one amide compound wherein the amide compound contains at least 12 carbon atoms and wherein the difference in static COF between first layer and second layer is at least 0.3, as determined by ASTM D1894, measured film to film, at 20 days of aging at 23°C and 50% relative humidity.

2. The film of Claim 1, wherein the propylene-based polymer of Component A has a density from 0.86 to 0.90 g/cc as measured in accordance with ASTM D-792-08.

3. The film of any of the previous claims, wherein the propylene-based polymer of Component A has a melt flow rate (MFR) from 0.5 to 12 g/10 min as measured in accordance with ASTM D-1238-04.

4. The film of any of the previous claims, wherein the propylene-based polymer of Component A is a propylene/ethylene copolymer.

5. The film of any of the previous claims, wherein the first ethylene/a-olefin interpolymer of Component B has a density from 0.90 to 0.94 g/cc as measured in accordance with ASTM D-792-08.

6. The film of any of the previous claims, wherein the first ethylene/a-olefin interpolymer of Component B has a melt index (12) from 0.5 to 5 g/10 min as measured in accordance with ASTM D-1238-04, condition 190°C/2.16 kg.

7. The film of any of the previous claims, wherein the first ethylene/a-olefin interpolymer of Component B is a heterogeneously branched interpolymer.

8. The film of any of the previous claims, wherein the second ethylene/a-olefin interpolymer of Component D is a heterogeneously branched interpolymer.

9. The film of any of the previous claims, further comprising a third layer formed from a third composition comprising the following a) an ethylene-based polymer with a density from 0.94 to 0.96 g/cc as measured in accordance with ASTM D-792-08, and a melt index (12) from 0.05 to 1 g/10 min as measured in accordance with ASTM D-1238-04, condition 190°C/2.16 kg.

10. The film of Claim 9, wherein the third layer is located between the first layer and second layer.

11. The film of Claim 9 or Claim 10, wherein the thickness of the third layer is from 40 percent to 70 percent of total film thickness.

12. The film of any of the previous claims, wherein the thickness of the first layer is from 10 percent to 30 percent, based on the total thickness of the film.

13. The film of any of the previous claims, wherein the thickness of the second layer is greater than 70 percent of the total thickness of the film.


**Patentansprüche**

1. Eine Folie, beinhaltend mindestens zwei Schichten, eine erste Schicht und eine zweite Schicht, wobei die erste Schicht aus einer ersten Zusammensetzung gebildet ist, die Folgendes beinhaltet:

A) ein Polymer auf Propylenbasis, das in einer Menge von mehr als oder gleich 1 Gewichtsprozent bis zu einer Menge von weniger als oder gleich 20 Gewichtsprozent, bezogen auf das Gewicht der ersten Zusammensetzung, vorhanden ist,

B) ein erstes Ethylen/$\alpha$-Olefin-Interpolymer, das in einer Menge von weniger als oder gleich 99 Gewichtsprozent bis zu einer Menge von mehr als oder gleich 50 Gewichtsprozent, bezogen auf das Gewicht der ersten Zusammensetzung, vorhanden ist, und

C) wahlweise ein LDPE-Homopolymer mit einer Dichte von 0,91 bis 0,93 g/cm$^3$, wie gemäß ASTM D-792-08 gemessen, und einem Schmelzindex (I2) von 0,2 bis 6 g/10 min, wie gemäß ASTM D-1238-04, Bedingung 190 °C/2,16 kg gemessen; und

wobei die zweite Schicht aus einer zweiten Zusammensetzung gebildet ist, die Folgendes beinhaltet:

D) ein zweites Ethylen/$\alpha$-Olefin-Interpolymer,

E) wahlweise ein LDPE-Homopolymer mit einer Dichte von 0,91 bis 0,93 g/cm$^3$, wie gemäß ASTM D-792-08 gemessen, und einem Schmelzindex (I2) von 0,2 bis 6 g/10 min, wie gemäß ASTM D-1238-04, Bedingung 190 °C/2,16 kg gemessen,

F) wahlweise eine erste Polymermischung, beinhaltend ein homogen verzweigtes Ethylen/$\alpha$-Olefin-Interpolymer und ein heterogen verzweigtes Ethylen/$\alpha$-Olefin-Interpolymer, und wobei die erste Polymermischung eine Dichte von 0,90 bis 0,93 g/cm$^3$, wie gemäß ASTM D-792-08 gemessen, und einen Schmelzindex (I2) von 0,5 bis 5 g/10 min, wie gemäß ASTM D-1238-04, Bedingung 190 °C/2,16 kg gemessen, aufweist; und

G) mindestens eine Amidverbindung, wobei die Amidverbindung mindestens 12 Kohlenstoffatome enthält und wobei der Unterschied des statischen Reibungskoeffizienten zwischen der ersten Schicht und der zweiten Schicht, wie durch ASTM D1894 bestimmt, gemessen von Folie zu Folie, nach 20 Tagen Alterung bei 23 °C und einer relativen Feuchtigkeit von 50 % mindestens 0,3 beträgt.

2. Folie gemäß Anspruch 1, wobei das Polymer auf Propylenbasis von Komponente A eine Dichte von 0,86 bis 0,90 g/cm$^3$, wie gemäß ASTM D-792-08 gemessen, aufweist.

3. Folie gemäß einem der vorhergehenden Ansprüche, wobei das Polymer auf Propylenbasis von Komponente A eine Schmelzflussrate (MFR) von 0,5 bis 12 g/10 min, wie gemäß ASTM D-1238-04 gemessen, aufweist.

4. Folie gemäß einem der vorhergehenden Ansprüche, wobei das Polymer auf Propylenbasis von Komponente A ein Propylen/Ethylen-Copolymer ist.

5. Folie gemäß einem der vorhergehenden Ansprüche, wobei das erste Ethylen/$\alpha$-Olefin-Interpolymer von Komponente B eine Dichte von 0,90 bis 0,94 g/cm$^3$, wie gemäß ASTM D-792-08 gemessen, aufweist.

6. Folie gemäß einem der vorhergehenden Ansprüche, wobei das erste Ethylen/$\alpha$-Olefin-Interpolymer von Komponente B einen Schmelzindex (I2) von 0,5 bis 5 g/10 min, wie gemäß ASTM D-1238-04, Bedingung 190 °C/2,16 kg gemessen, aufweist.

7. Folie gemäß einem der vorhergehenden Ansprüche, wobei das erste Ethylen/$\alpha$-Olefin-Interpolymer von Komponente B ein heterogen verzweigtes Interpolymer ist.

8. Folie gemäß einem der vorhergehenden Ansprüche, wobei das zweite Ethylen/$\alpha$-Olefin-Interpolymer von Komponente D ein heterogen verzweigtes Interpolymer ist.

9. Folie gemäß einem der vorhergehenden Ansprüche, die ferner eine dritte Schicht beinhaltet, die aus einer dritten Zusammensetzung gebildet ist, die Folgendes beinhaltet: a) ein Polymer auf Ethylenbasis mit einer Dichte von 0,94 bis 0,96 g/cm$^3$, wie gemäß ASTM D-792-08 gemessen, und einem Schmelzindex (I2) von 0,05 bis 1 g/10 min, wie gemäß ASTM D-1238-04, Bedingung 190 °C/2,16 kg gemessen.

10. Folie gemäß Anspruch 9, wobei sich die dritte Schicht zwischen der ersten Schicht und der zweiten Schicht befindet.

11. Folie gemäß Anspruch 9 oder Anspruch 10, wobei die Dicke der dritten Schicht 40 Prozent bis 70 Prozent der Gesamtdicke der Folie beträgt.

12. Folie gemäß einem der vorhergehenden Ansprüche, wobei die Dicke der ersten Schicht 10 Prozent bis 30 Prozent, bezogen auf die Gesamtdicke der Folie, beträgt.

13. Folie gemäß einem der vorhergehenden Ansprüche, wobei die Dicke der zweiten Schicht größer als 70 Prozent der Gesamtdicke der Folie ist.

**Revendications**

1. Un film comprenant au moins deux couches, une première couche et une deuxième couche, dans lequel la première couche est formée à partir d'une première composition comprenant

A) un polymère à base de propylène présent en une quantité allant de supérieure ou égale à 1 % en poids à une quantité inférieure ou égale à 20 % en poids, rapporté au poids de la première composition,

B) un premier interpolymère éthylène/$\alpha$-oléfine présent en une quantité allant d'inférieure ou égale à 99 % en poids à une quantité supérieure ou égale à 50 % en poids, rapporté au poids de la première composition, et

C) éventuellement un homopolymère de LDPE avec une masse volumique allant de 0,91 à 0,93 g/cc, mesurée selon l'ASTM D-792-08, et un indice de fluidité à chaud (I2) allant de 0,2 à 6 g/10 min, mesuré selon l'ASTM D-1238-04, condition 190 °C/2,16 kg ; et

dans lequel la deuxième couche est formée à partir d'une deuxième composition comprenant :

D) un deuxième interpolymère éthylène/$\alpha$-oléfine,

E) éventuellement un homopolymère de LDPE avec une masse volumique allant de 0,91 à 0,93 g/cc, mesurée selon l'ASTM D-792-08, et un indice de fluidité à chaud (I2) allant de 0,2 à 6 g/10 min, mesuré selon l'ASTM D-1238-04, condition 190 °C/2,16 kg,

F) éventuellement un premier mélange de polymères comprenant un interpolymère éthylène/$\alpha$-oléfine ramifié de manière homogène et un interpolymère éthylène/$\alpha$-oléfine ramifié de manière hétérogène, et dans lequel le premier mélange de polymères a une masse volumique allant de 0,90 à 0,93 g/cc, mesurée selon l'ASTM D-792-08, et un indice de fluidité à chaud (I2) allant de 0,5 à 5 g/10 min, mesuré selon l'ASTM D-1238-04, condition 190 °C/2,16 kg et

G) au moins un composé amide dans lequel le composé amide contient au moins 12 atomes de carbone et dans lequel la différence de CFS (coefficient de frottement statique) entre la première couche et la deuxième couche est d'au moins 0,3, déterminée selon l'ASTM D1894, mesuré film à film, à 20 jours de vieillissement à 23 °C et 50 % d'humidité relative.

2. Le film de la revendication 1, dans lequel le polymère à base de propylène du Composant A a une masse volumique allant de 0,86 à 0,90 g/cc mesurée selon l'ASTM D-792-08.

3. Le film de n'importe lesquelles des revendications précédentes, dans lequel le polymère à base de propylène du Composant A a un débit à l'état fondu (MFR) allant de 0,5 à 12 g/10 min mesuré selon l'ASTM D-1238-04.

4. Le film de n'importe lesquelles des revendications précédentes, dans lequel le polymère à base de propylène du Composant A est un copolymère propylène/éthylène.

5. Le film de n'importe lesquelles des revendications précédentes, dans lequel le premier interpolymère éthylène/$\alpha$-oléfine du Composant B a une masse volumique allant de 0,90 à 0,94 g/cc mesurée selon l'ASTM D-792-08.

6. Le film de n'importe lesquelles des revendications précédentes, dans lequel le premier interpolymère éthylène/$\alpha$-oléfine du Composant B a un indice de fluidité à chaud (I2) allant de 0,5 à 5 g/10 min mesuré selon l'ASTM D-1238-04, condition 190 °C/2,16 kg.

7. Le film de n'importe lesquelles des revendications précédentes, dans lequel le premier interpolymère éthylène/$\alpha$-oléfine du Composant B est un interpolymère ramifié de manière hétérogène.

8. Le film de n'importe lesquelles des revendications précédentes, dans lequel le deuxième interpolymère éthylène/$\alpha$-oléfine du Composant D est un interpolymère ramifié de manière hétérogène.

9. Le film de n'importe lesquelles des revendications précédentes, comprenant en outre une troisième couche formée à partir d'une troisième composition comprenant ce qui suit : a) un polymère à base d'éthylène avec une masse volumique allant de 0,94 à 0,96 g/cc mesurée selon l'ASTM D-792-08, et un indice de fluidité à chaud (I2) allant de 0,05 à 1 g/10 min mesuré selon l'ASTM D-1238-04, condition 190 °C/2,16 kg.

10. Le film de la revendication 9, dans lequel la troisième couche est située entre la première couche et la deuxième couche.

11. Le film de la revendication 9 ou de la revendication 10, dans lequel l'épaisseur de la troisième couche va de 40 pour cent à 70 pour cent de l'épaisseur totale du film.

12. Le film de n'importe lesquelles des revendications précédentes, dans lequel l'épaisseur de la première couche va de 10 pour cent à 30 pour cent, rapporté à l'épaisseur totale du film.

13. Le film de n'importe lesquelles des revendications précédentes, dans lequel l'épaisseur de la deuxième couche est supérieure à 70 pour cent de l'épaisseur totale du film.

**Static COF**
**Layer A - Layer A**

FIGURE 1

**Dynamic COF**
**Layer A - Layer A**

FIGURE 2

**Static COF**
**Layer B - Layer B**

FIGURE 3

**Dynamic COF**
**Layer B - Layer B**

FIGURE 4

**Differential COF Comparative**
**Sample 63 vs. Control**

FIGURE 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005103123 A
- WO 2008082975 A
- WO 200244252 A
- WO 200244251 A
- WO 199837143 A
- US 4389450 A
- US 4560598 A
- WO 2009091952 A
- WO 2008017244 A
- WO 2008079755 A
- WO 2010003047 A
- WO 2010002837 A
- WO 2010039687 A
- US 10042319 W
- EP 09382115 A
- EP 2233520 A1
- US 6919407 B
- WO 2009067337 A
- US 5504172 A
- WO 0001745 A
- US 5272236 A
- US 5278272 A
- US 6723398 B, Chum

### Non-patent literature cited in the description

- **RAMAMURTHY.** *Journal of Rheology,* 1986, vol. 30 (2), 337-357
- **RANDALL.** *Rev. Macromal. Chem. Phys.,* 1989, vol. C29 (2&3), 285-293
- **KIRK-OTHMER.** The Encyclopedia of Chemical Technology. John Wiley & Sons, 1981, vol. 16, 416-417
- THE ENCYCLOPEDIA OF CHEMICAL TECHNOLOGY. vol. 18, 191-192
- Coextrusion. **TOM I. BUTLER.** Film Extrusion Manual: Process, Materials, Properties. TAPPI Press, 1992, 31-80
- **TH. G. SCHOLTE ; N. L. J. MEIJERINK ; H. M. SCHOFFELEERS ; A. M. G. BRANDS.** *J. Appl. Polym. Sci.,* 1984, vol. 29, 3763-3782
- **E. P. OTOCKA ; R. J. ROE ; N. Y. HELLMAN ; P. M. MUGLIA.** *Macromolecules,* 1971, vol. 4, 507
- **WILLIAMS ; WARD.** Polym. Let. *J. Polym. Sci.,* 1968, vol. 6, 621
- Thermal Characterization of Polymeric Materials. Academic Press, 1981
- **RANDALL.** Reviews in Macromolecular Chemistry and Physics. *Journal of Macromolecular Science,* 1989, vol. C29 (2 & 3), 201-317
- **P.J. DESLAURIERS ; D.C. ROHLFING ; E.T. HSIEH.** Quantifying Short Chain Branching in Ethylene 1-Olefin Copolymers using Size Exclusion Chromatography and Fourier Transform Infrared Spectroscopy. *Polymer,* 2002, vol. 43, 159-170
- **R.P. MARKOVICH ; L.G. HAZLITT ; L. SMITH.** *ACS Symposium Series: Chromatography of Polymers,* 1993, vol. 521, 270-276